# EUROPÄISCHE PATENTSCHRIFT

(11) **EP 1 087 088 B1**
(45) Veröffentlichungstag und Bekanntmachung des Hinweises auf die Patenterteilung: **26.03.2008**
(21) Anmeldenummer: 00118981.0
(22) Anmeldetag: 01.09.2000
(51) Int. Cl.: E05F 15/00, F16P 3/12, H01H 47/00, H01H 3/14, H02H 5/10

(54) **Vorrichtung zur Ruhestromüberwachung einer sicherheitskritischen Einrichtung**
Equipment for static current monitoring of a safety critical device
Equipement pour la surveillance du courant permanent d'un dispositif critique de sécurité

(30) Priorität: 25.09.1999 DE 19946039
(43) Veröffentlichungstag der Anmeldung: 28.03.2001
(73) Patentinhaber: Beckhausen, Karlheinz, 50931 Köln (DE)
(72) Erfinder: Beckhausen, Karlheinz, 50931 Köln (DE); Menz, Jürgen, 50858 Köln (DE)
(74) Vertreter: Nau, Walter

(56) Entgegenhaltungen:
- FR-A1- 2 642 894

## Beschreibung

Die Erfindung betrifft eine Vorrichtung zur Ruhestromüberwachung einer sicherheitskritischen Einrichtung gemäß den Merkmalen des Oberbegriffes des Patentanspruches 1.

Solche Vorrichtungen zur Ruhestromüberwachung an sicherheitskritischen Einrichtungen sind allgemein bekannt, wie z.B. in FR-A-2 642 894. Bei von einem Antrieb bewegten Elementen, wie beispielsweise Schiebetoren, kann es beim Schließen zu sicherheitskritischen Situationen kommen, wenn beispielsweise eine Person zwischen dem Schiebetor und einem festen Element eingeklemmt werden könnte. Zu diesem Zweck weisen solche beweglichen Elemente taktile Sensoren auf, die das Vorhandensein von Hindernissen (Personen, Fahrzeugen oder dergleichen) erfassen und den Antrieb nach einer solchen Erfassung augenblicklich automatisch abschalten, um eine Gefährdung des Hindernisses zu vermeiden.

Aus Gründen der Betriebssicherheit wird zur Erfassung eines solchen Hindernisses nicht nur ein taktile Sensor eingesetzt, der eine Schalteinrichtung aufweist, die durch die Betätigung durch das Hindernis geschlossen wird und für die Abschaltung sorgt. Dies ist zwar das Grundprinzip, hat aber den Nachteil, daß mit diesem Verfahren Leitungsunterbrechungen, Kurzschlüsse und dergleichen nicht erfaßt werden können.

Um solche Situationen wie Kurzschluß oder Leitungsunterbrechung feststellen zu können, wird eine sogenannte Ruhestromüberwachung durchgeführt. Hierbei weist der taktile Sensor neben der Schalteinrichtung zur Erfassung des Hindernisses auch einen elektrischen Abschluß auf, wobei dieser elektrische Abschluß in einem Ruhestromkreis liegt. Durch diesen elektrischen Abschluß fließt permanent eine Ruhestrom, der, wenn kein Hindernis erfaßt wurde, einen konstanten Wert hat. Sollte plötzlich ein Kurzschluß oder eine Leitungsunterbrechung auftreten, wird dies durch Änderung des konstanten Ruhestromes erfaßt. Ebenso verändert sich der Ruhestrom, wenn der Schalter den elektrischen Abschluß kurzschließt, so daß durch diese in ihrer Größe bekannte Änderung des Ruhestromes bei Erfassung des Hindernisses ein Schaltvorgang ausgelöst werden kann.

Diese Ruhestromüberwachung hat sich hinsichtlich der Erfassung von Hindernissen, wobei auch Kurzschlüsse und Leitungsunterbrechungen erfaßt werden können, bewährt.

Ein Nachteil liegt jedoch darin, daß durch den Stromfluß durch den elektrischen Abschluß an diesem eine Spannung anliegt, die aufgrund der Umwelteinflüsse, die am Einbauort des elektrischen Abschlusses herrschen, zu Materialzerstörungen an den beteiligten Bauteilen und deren Verbindungen und weiteren Beeinträchtigungen bei der Signalerfassung führt. Dies führt nicht nur zu Beschädigungen oder sogar zum Ausfall des taktilen Sensors, sondern auch zu einem häufig erforderlich werdenden Austausch des Sensors, der unerwünscht ist.

Solche sicherheitskritischen Einrichtungen mit dem taktilen Sensor zur Erfassung von Hindernissen werden in der Regel in einem Spannungsbereich betrieben, der unterhalb der sogenannten Kleinschutzspannung (42 Volt) liegt. Etabliert bei der Stromversorgung sind Netzteile mit 12 Volt oder 24 Volt, so daß aufgrund dieser hohen Spannungswerte auch deutliche Materialzerstörungserscheinungen feststellbar sind, die zu den schon geschilderten Nachteilen führen, die ganz besonders sicherheitskritisch sind.

Selbst die Verwendung von hochwertigen Materialien im Bereich des elektrischen Abschlusses einschließlich der elektrischen Verbindungen führt, wie sich herausgestellt hat, nicht zu einer deutlichen Verhinderung der Materialzerstörung. Außerdem haben höherwertige Materialien (wie zum Beispiel V2A-Stahl) den Nachteil der höheren Kosten.

Der Erfindung liegt daher die Aufgabe zugrunde, eine Vorrichtung zur Ruhestromüberwachung einer sicherheitskritischen Einrichtung bereitzustellen, mit der mit einfachen Mitteln Beschädigungen oder Ausfälle des taktilen Sensors vermieden werden.

Diese Aufgabe ist durch die Merkmale des Patentanspruches 1 gelöst.

Erfindungsgemäß sind Mittel zur Erzeugung des in dem Ruhestromkreises fließenden Stromes derart vorgesehen, daß an dem elektrischen Abschluß eine Spannung von maximal einem Volt anliegt.

Es hat sich herausgestellt, daß Materialzerstörungen im Bereich des taktilen Sensors, also im Bereich des elektrischen Abschlusses einschließlich der elektrischen Verbindungen, deutlich reduziert beziehungsweise weitestgehend vermieden werden, wenn mit Spannungen im Bereich von unterhalb von einem Volt gearbeitet wird. Die Erzeugung des in dem Ruhestromkreises fließenden Stromes durch Mittel, die bewirken, daß an dem elektrischen Abschluß die Spannung maximal ein Volt beträgt, hat den Vorteil, daß die bisherigen Mittel zur Erzeugung der Spannung beziehungsweise des in dem Ruhestromkreises fließenden Stromes beibehalten werden können und lediglich so dimensioniert werden müssen, daß sich die Spannung von maximal einem Volt einstellt. Dadurch können bisherige Vorrichtungen zur Ruhestromüberwachung, die mit Spannungen von zum Beispiel 12 Volt oder 24 Volt an dem elektrischen Abschluß betrieben wurden, einfach, schnell und kostengünstig so geändert werden, daß die Materialzerstörungen an dem taktilen Sensor unterbleiben. Andererseits ist der Spannungsbereich von bis zu einem Volt ausreichend, um eine sichere Signalauswertung zu erreichen und diese nicht durch Meßfehler oder Störgrößen zu verhindern oder zu verfälschen.

In Weiterbildung der Erfindung erfolgt die Dimensionierung der elektrischen Bauteile derart, daß an dem elektrischen Abschluß eine Spannung im Bereich von 0,4 Volt bis 0,8 Volt anliegt. Es hat sich herausgestellt, daß dieser Spannungsbereich besonders vorteilhaft ist, da aufgrund der oberen Grenze Materialzerstörungserscheinungen, die geringfügig im Bereich knapp über einem Volt auftreten könnten, noch wirksamer ausgeschlossen werden. Die Untergrenze von 0,4 Volt hat den Vorteil, daß für die Auswertung, ob der taktile Sensor betätigt wurde oder nicht, noch eine ausreichend hohe Spannung zur Verfügung steht, die zu einem entsprechend hohen Strom in dem Ruhekreis führt, der sich von dem Strom, der fließt, wenn der Schalter nach Betätigung durch ein Hindernis geschlossen wurde, unterscheidet.

In Weiterbildung der Erfindung sind die Mittel zur Erzeugung des in dem Ruhestromkreises fließenden Stromes als Spannungsquelle ausgebildet. Durch diese Spannungsquelle kann durch Vorgabe der Spannung unter Berücksichtigung der Größe des elektrischen Abschlusses (bei einem Widerstand als elektrischer Abschluß also der Widerstandswert) der in dem Ruhestromkreis fließende Strom eingestellt und gleichzeitig die Spannung an dem elektrischen Abschluß auf die maximale Größe von einem Volt begrenzt werden. Damit ist also eine einfache Einhaltung der maximalen Obergrenze für die Spannung an dem elektrischen Abschluß gegeben.

In Weiterbildung der Erfindung sind die Mittel zur Erzeugung des in dem Ruhestromkreises fließenden Stromes als Stromquelle ausgebildet, die einen solchen Strom in den elektrischen Abschluß des taktilen Sensors einprägen, aus dem die Spannung von maximal einem Volt resultiert. Auch damit kann die maximale Spannung von einem Volt (beziehungsweise ein konstanter, unter einem Volt liegender Wert) durch entsprechende Dimensionierung des eingeprägten Stromes und dem Wert (Widerstandswert) des elektrischen Abschlusses (Widerstand) eingehalten werden.

Sowohl die Spannungsquelle als auch die Stromquelle können zum Beispiel kurzschlußsicher mittels einfacher und an sich bekannter Operationsverstärker-Schaltungen realisiert werden.

Zu der Spannungsquelle und der Stromquelle ist noch auszuführen, daß diese in vorteilhafter Weise als Gleichspannungsbeziehungsweise Gleichstromquelle ausgebildet sind und bei Verwendung einer solchen der elektrische Abschluß ein Ohmscher Widerstand ist.

Darüber hinaus ist aber auch denkbar, daß Wechselspannungsquellen beziehungsweise Wechselstromquellen zum Einsatz kommen und der elektrische Abschluß ein komplexer Abschluß ist, der sich aus einem Realteil und einem Imaginärteil zusammensetzt. Denkbar sind also auch solche Abschlüsse, die eine Spule (Imaginärteil) oder einen Kondensator (Imaginärteil) umfassen. Da sich in der Regel sowohl Spulen als auch Kondensatoren nicht als rein imaginäre Teile beschreiben lassen, umfassen diese auch gleichzeitig einen Widerstand als Realteil.

In Weiterbildung der Erfindung ist der taktile Sensor an einer elektronischen Auswerteeinheit angeschlossen, die zumindest einen Schwellwertschalter sowie eine Schaltstufe aufweist. Dadurch läßt sich eine kompakte Auswerteeinheit realisieren, die neben der Erfassung eines Hindernisses mittels des taktilen Sensors auch die Auswertung mittels des Schwellwertschalters und die Auslösung eines Schaltvorganges mittels einer Schaltstufe bewirkt.

In Weiterbildung der Erfindung sind die Mittel (Spannungsquelle oder Stromquelle) in oder außerhalb der elektrischen Auswerteeinheit angeordnet. Dadurch kann der Einbauort der Mittel zur Erzeugung des in dem Ruhestromkreises fließenden Stromes frei gewählt und den vorhandenen konstruktiven Gegebenheiten angepaßt werden. In der Regel wird als Einbauort für die Mittel die elektronische Auswerteeinheit gewählt, da hier eine Stromversorgung (Netzanschluß) zur Verfügung steht und zu dem beweglichen Element, an dem der taktile Sensor angeordnet, keine Energieübertragung stattfinden muß.

In Weiterbildung der Erfindung ist die Spannung an dem elektrischen Anschluß erfaßbar und anzeigbar. Somit ist eine sichtbare Kontrolle gegeben, das sich die Spannung unterhalb von einem Volt befindet und gleichzeitig eine Aussage möglich, ob der taktile Sensor betätigt wurde oder nicht.

Zwei Ausführungsbeispiele für Vorrichtungen zur Ruhestromüberwachung, auf die die Erfindung jedoch nicht beschränkt ist, sind im folgenden beschrieben und anhand der beiden Figuren erläutert.

Es zeigen:
- Figur 1:: eine Vorrichtung zur Ruhestromüberwachung mit einer Spannungsquelle und
- Figur 2:: eine Vorrichtung zur Ruhestromüberwachung mit einer Stromquelle.

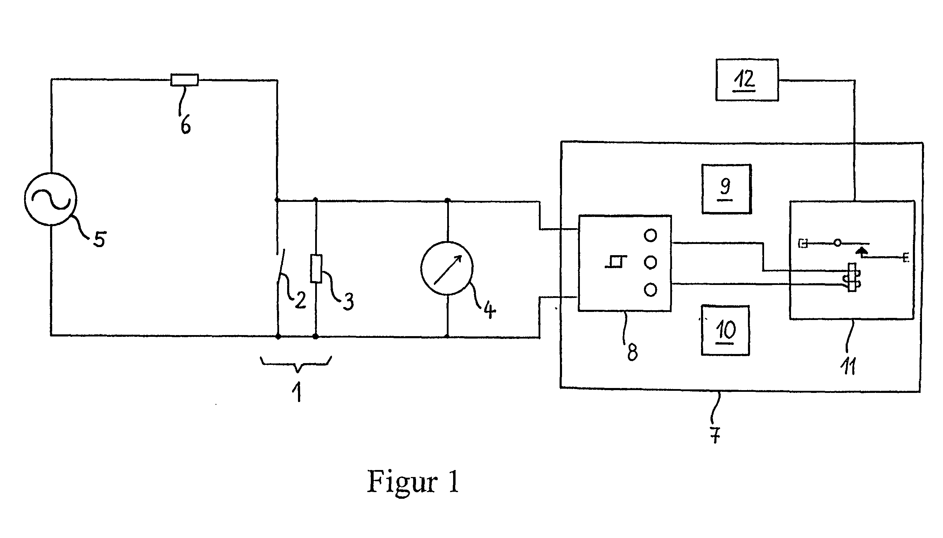

Figur 1 zeigt eine Vorrichtung zur Ruhestromüberwachung einer sicherheitskritischen Einrichtung beziehungsweise für eine sicherheitskritische Einrichtung. Bei einer solchen sicherheitskritischen Einrichtung handelt es sich beispielsweise um Schiebetore von Umzäunungen von Geländen, Lamellentore von Fabrikhallen, Schaltmatten oder dergleichen. Dieses sind bevorzugte Anwendungsgebiete der Erfindung, auf die diese jedoch nicht beschränkt ist.

Diese Vorrichtung weist einen taktilen Sensor 1 auf, der einen Schalter 2, der bei Betätigung des taktilen Sensors 1 schließt, und einen Widerstand 3 (Ohmscher Widerstand) umfaßt. Der Schalter 2 kann beispielsweise aus zwei parallel verlaufenden Drähten, Geflechten oder dergleichen bestehen, die zum Beispiel in einem gummiartigen Schlauch zu einer sogenannten Schaltleiste zusammengefügt sind. Diese Schaltleiste ist beispielsweise an der Stirnseite eines Schiebetores angeordnet, wobei beim Schließen des Schiebetores mittels eines elektrischen Antriebsmotores und Auffahren auf ein Hindernis (zum Beispiel Person) oder aber auch bei Erreichen der Endstellung des Schiebetores der Schalter 2 schließt. Entsprechendes gilt für das Betreten einer Schaltmatte durch eine Person oder deren Weggehen. Durch das Schließen des Schalters 2 wird der Widerstand 3 kurzgeschlossen und dadurch der Stromfluß durch den Widerstand 3 verändert, wobei diese Veränderung erfaßbar und auswertbar ist. Die an dem Widerstand 3 anliegende Spannung (proportional zu dem Strom, der durch den Widerstand 3 fließt) kann gegebenenfalls durch einen Spannungsmesser 4 (Voltmeter) erfaßt werden.

Zur Einstellung eines solchen Stromes durch den Ruhestromkreis beziehungsweise einer solchen Spannung an den Widerstand 3, die maximal ein Volt beträgt, ist eine Spannungsquelle 5 vorgesehen. Zur Strombegrenzung kann noch ein Vorwiderstand 6 vorhanden sein, muß es aber nicht. Den Ruhestromkreis bilden somit die Spannungsquelle 5 sowie der taktile Sensor 1 und gegebenenfalls der Vorwiderstand 6. Ist der Vorwiderstand 6 vorhanden, bilden die beiden Widerstände 3 und 6 einen Spannungsteiler, so daß die Spannung der Spannungsquelle 5 derart in Abhängigkeit des Spannungsteilerverhältnisses gewählt werden muß, daß sich an dem Widerstand 3 eine konstante beziehungsweise weitestgehend konstante Spannung von maximal einem Volt eingestellt. Der Einsatz des Spannungsteilers, bestehend aus den Widerständen 3 und 6, hat den Vorteil, daß die Spannung an dem Widerstand 3 sehr genau aufgrund des Spannungsteilerverhältnisses durch Dimensionierung der Widerstände eingestellt und eingehalten werden kann. Damit erübrigt es sich, eine sehr genaue Spannungsquelle 5 einzusetzen. Gegebenenfalls kann der Vorwiderstand 6 auch als veränderbarer Widerstand ausgebildet sein, um bei geöffnetem Schalter 2 die Spannung an dem Widerstand 3 sehr präzise unter Zuhilfenahme des Spannungsmessers 4 einstellen zu können. Ein weiterer Vorteil des Spannungsteilers ist darin zu sehen, daß sich Schwankungen der Spannung der Spannungsquelle 5 nicht oder nicht wesentlich auf die Spannung an dem Widerstand 3 auswirken.

Der taktile Sensor 1 ist an eine elektronische Auswerteeinheit 7 angeschlossen, wobei die Spannung des Widerstandes 3 zunächst einem Schwellwertschalter 8 zugeführt wird. Weiterhin umfaßt die elektronische Auswerteeinheit 7 eine Stromversorgung 9 (mit der eine Netzspannung eines Netzanschlusses, zum Beispiel 220 Volt Wechselspannung, umgesetzt wird in eine Gleichspannungsversorgung für die Auswerteeinheit 7) sowie eine Anzeigeeinheit 10, mit der zum Beispiel Betrieb, Fehler und Ausgangssignal des Schwellwertschalters 8 und weitere Größen angezeigt werden können. Darüber hinaus kann die Auswerteeinheit 7 weitere Elemente umfassen, die zwar für den Betrieb erforderlich sind, aber zur Beschreibung der Ruhestromüberwachung entbehrlich und somit nicht gezeigt sind.

Das Ausgangssignal des Schwellwertschalters 8, der beispielsweise als Schmitt-Trigger ausgebildet ist, wird einer Schaltstufe 11 zugeführt. Der Schwellwertschalter 8 arbeitet in Abhängigkeit des Eingangssignales in einer solchen Art und Weise, daß er zum Beispiel bei geöffnetem Schalter 2 kein Ausgangssignal abgibt und somit die Schaltstufe 11 nicht angesteuert wird. Wird der Schalter 2 durch Erfassung eines Hindernisses betätigt, gibt der Schwellwertschalter 8 ein Ausgangssignal an die Schaltstufe 11, die einen Schaltvorgang auslöst. An der Schaltstufe 11 (beispielsweise ein Relais, wie in Figur 1 andeutungsweise gezeigt) ist ein Aktuator 12 angeschlossen, der je nach Einsatz eingeschaltet oder ausgeschaltet wird. Bei einem Schiebetor beispielsweise ist der Aktuator 12 ein Elektromotor, mit dem das Schiebetor geöffnet oder geschlossen wird. Beim Schließvorgang wird dieser Elektromotor eingeschaltet, wobei der Elektromotor sofort abgeschaltet werden kann, wenn mittels des taktilen Sensors 1 an dem Schiebetor ein Hindernis oder auch die Endstellung des Schiebetores erfaßt wurde.

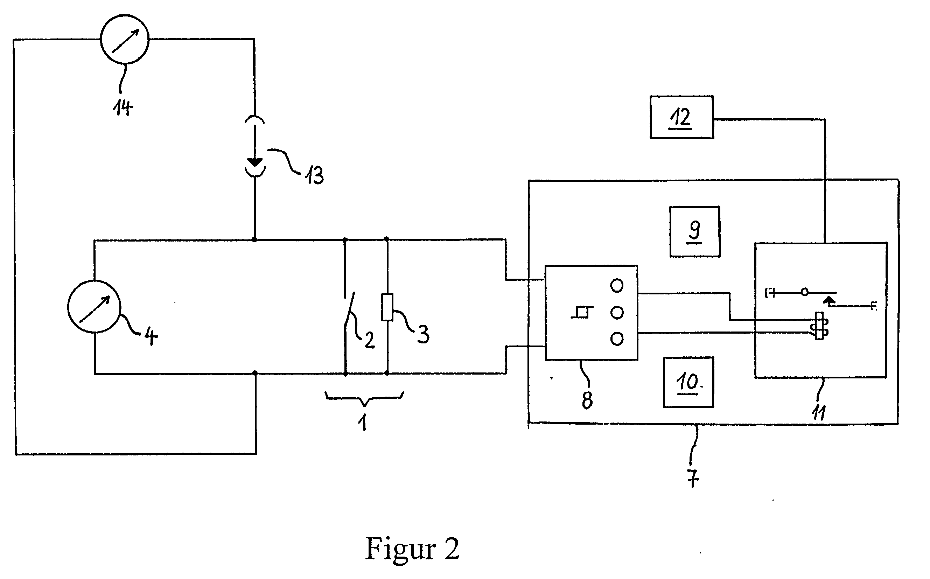

Figur 2 zeigt eine Vorrichtung zur Ruhestromüberwachung mit einer Stromquelle, wobei die in Figur 1 gezeigte Stromquelle 5 und der Vorwiderstand 6 durch eine Stromquelle 13 ersetzt sind, die einen konstanten Strom in den Widerstand 3 einprägt. Dieser Strom ist so dimensioniert, daß in Abhängigkeit des Wertes des Widerstandes 3 mit dem Spannungsmesser 4 eine maximale Spannung von einem Volt, vorzugsweise eine Spannung aus dem Spannungsbereich von 0,4 bis 0,8 Volt, angezeigt wird. Sollte die Größe des eingeprägten Stromes von Bedeutung sein, kann diese mit einem Strommesser 14 erfaßt und angezeigt werden.

In den Figuren 1 und 2 ist eine einfache Ausführung von Vorrichtungen zur Ruhestromüberwachung gezeigt. Zur Erhöhung der Sicherheit ist es denkbar, ein Element oder mehrere Elemente redundant, das heißt vorzugsweise doppelt, auszuführen.

Ergänzend ist noch zu erwähnen, daß es sich bei taktilen Sensoren um solche Sensoren handeln soll, die insbesondere auf Berührung oder Annäherung reagieren. So kann zum Beispiel eine berührungsempfindliche Fläche, wie z.B. eine Schaltmatte, eine Lichtschranke oder (allgemein) ein sonstiges Erfassungsorgan zur Erfassung einer physikalischen Größe vorhanden sein, welches bei Annäherung oder Berührung oder (allgemein) in entsprechender Weise ein Signal erzeugt, das den Schalter 2, der zum Beispiel auch als Relais ausgebildet sein kann, betätigt.

### Bezugszeichenliste:

1. Taktiler Sensor
2. Schalter
3. Widerstand
4. Spannungsmesser
5. Spannungsquelle
6. Vorwiderstand
7. Elektronische Auswerteeinheit
8. Schwellwertschalter
9. Stromversorgung
10. Anzeigeeinheit
11. Schaltstufe
12. Aktuator
13. Stromquelle
14. Strommesser

## Patentansprüche

1. Vorrichtung zur Ruhestromüberwachung einer sicherheitskritischen Einrichtung mit einem taktilen Sensor (1), der einen elektrischen Abschluß (3) aufweist, wobei der in dem Ruhestromkreis fließende Strom durch Betätigung des taktilen Sensors (1) veränderbar ist und diese Veränderung einen Schaltvorgang auslöst,
***gekennzeichnet durch*** Mittel zur Erzeugung des in dem Ruhestromkreis fließenden Stromes derart, daß an dem elektrischen Abschluß (3) eine Spannung von maximal einem Volt anliegt.

2. Vorrichtung nach Anspruch 1,
***dadurch gekennzeichnet, daß*** an dem elektrischen Abschluß (3) eine Spannung im Bereich von 0,4 Volt bis 0,8 Volt anliegt.

3. Vorrichtung nach Anspruch 1 oder 2,
***dadurch gekennzeichnet, daß*** die Mittel zur Erzeugung des in dem Ruhestromkreis fließenden Stromes als Spannungsquelle (5) ausgebildet sind.

4. Vorrichtung nach Anspruch 1 oder 2,
***dadurch gekennzeichnet, daß*** die Mittel zur Erzeugung des in dem Ruhestromkreis fließenden Stromes als Stromquelle (13) ausgebildet sind, die einen solchen Strom in den elektrischen Abschluß (3) des taktilen Sensors (1) einprägen, aus dem die Spannung von maximal einem Volt resultiert.

5. Vorrichtung nach einem der vorhergehenden Ansprüche,
***dadurch gekennzeichnet, daß*** der taktile Sensor (1) an einer elektronischen Auswerteeinheit (7) angeschlossen ist, die zumindest einen Schwellwertschalter (8) sowie eine Schaltstufe (11) aufweist.

6. Vorrichtung nach Anspruch 5,
***dadurch gekennzeichnet, daß*** die Mittel zur Erzeugung des in dem Ruhestromkreis fließenden Stromes in oder außerhalb der elektrischen Auswerteeinheit (7) angeordnet sind.

7. Vorrichtung nach einem der vorhergehenden Ansprüche,
***dadurch gekennzeichnet, daß*** die Spannung an dem elektrischen Abschluß (3) erfaßbar und anzeigbar ist.

## Claims

1. Apparatus for monitoring the closed-circuit current of a safety-critical device with a tactile sensor (1), which has an electrical termination (3), it being possible for the current flowing in the closed circuit to be changed by means of actuating the tactile sensor (1), and this change triggering a switching operation, **characterized by** means for producing the current flowing in the closed circuit in such a way that a voltage of a maximum of one volt is present at the electrical termination (3).

2. Apparatus according to Claim 1, **characterized in that** a voltage in the range of from 0.4 volt to 0.8 volt is present at the electrical termination (3).

3. Apparatus according to Claim 1 or 2, **characterized in that** the means for producing the current flowing in the closed circuit are in the form of a voltage source (5).

4. Apparatus according to Claim 1 or 2, **characterized in that** the means for producing the current flowing in the closed circuit are in the form of a current source (13), which injects such a current into the electrical termination (3) of the tactile sensor (1), which results in the voltage of a maximum of one volt.

5. Apparatus according to one of the preceding claims, **characterized in that** the tactile sensor (1) is connected to an electronic evaluation unit (7), which has at least one threshold value switch (8) and a switching stage (11).

6. Apparatus according to Claim 5, **characterized in that** the means for producing the current flowing in the closed circuit are arranged in or outside of the electrical evaluation unit (7).

7. Apparatus according to one of the preceding claims, **characterized in that** the voltage at the electrical termination (3) can be detected and indicated.

## Revendications

1. Dispositif de surveillance du courant de repos d'un équipement essentiel à la sécurité comprenant un capteur tactile (1) qui présente une terminaison électrique (3), le courant qui circule dans le circuit de courant de repos pouvant être modifié en actionnant le capteur tactile (1) et cette modification déclenchant un processus de commutation, **caractérisé par** des moyens pour générer le courant qui circule dans le circuit de courant de repos de manière à ce qu'une tension maximale d'un volt soit appliquée à la terminaison électrique (3).

2. Dispositif selon la revendication 1, **caractérisé en ce qu'**une tension comprise dans la plage de 0,4 volt à 0,8 volt est appliquée à la terminaison électrique (3).

3. Dispositif selon la revendication 1 ou 2, **caractérisé en ce que** les moyens pour générer le courant qui circule dans le circuit de courant de repos sont réalisés sous la forme d'une source de tension (5).

4. Dispositif selon la revendication 1 ou 2, **caractérisé en ce que** les moyens pour générer le courant qui circule dans le circuit de courant de repos sont réalisés sous la forme d'une source de courant (13) qui applique à la terminaison électrique (3) du capteur tactile (1) un courant tel qu'il en résulte 1a tension maximale d'un volt.

5. Dispositif selon l'une des revendications précédentes, **caractérisé en ce que** le capteur tactile (1) est raccordé à une unité d'interprétation électronique (7) qui présente au moins un détecteur de valeur de seuil (8) ainsi qu'un étage de commutation (11).

6. Dispositif selon la revendication 5, **caractérisé en ce que** les moyens pour générer le courant qui circule dans le circuit de courant de repos sont disposés à l'intérieur ou à l'extérieur de l'unité d'interprétation électrique (7).

7. Dispositif selon l'une des revendications précédentes, **caractérisé en ce que** la tension à la terminaison électrique (3) peut être détectée et affichée.
